# EUROPÄISCHE PATENTANMELDUNG

(11) **EP 4 417 580 A1**
(43) Veröffentlichungstag der Anmeldung: **21.08.2024**
(21) Anmeldenummer: 23156584.7
(22) Anmeldetag: 14.02.2023
(51) Int. Cl.: C01G 49/10, C01B 25/10, C22B 7/00, C22B 26/12, H01M 10/54

(54) **RÜCKGEWINNUNG VON PHOSPHOR- UND EISENVERBINDUNGEN AUS LFP/LFMP-HALTIGEN MATERIALIEN**

(71) Anmelder: LANXESS Deutschland GmbH, 50569 Köln (DE)
(72) Erfinder: BOLL, Matthias, 51061 Köln (DE)

(57) **Zusammenfassung**

Die Erfindung betrifft ein Verfahren zur Gewinnung von Phosphor- und Eisenverbindungen aus LFP- und/oder LFMP-haltigen Materialien, dadurch gekennzeichnet, dass man
i) ein LFP- und/oder LFMP-haltiges Material in Gegenwart einer Kohlenstoff-Quelle mit Chlorgas bei einer Temperatur von 300 bis 900°C umsetzt und
ii) die gebildeten Chlorphosphorverbindungen, insbesondere Phosphoroxychlorid und ggf. Phosphortrichlorid und Eisenchlorid im Abgasstrom abgeleitet werden, und aus dem Abgasstrom
iii) das Eisenchlorid und
iv) die Chlorphosphorverbindungen bei unterschiedlichen Temperaturen getrennt werden.

## Beschreibung

Die Erfindung betriff ein Verfahren zur Wiedergewinnung von Phosphor- und Eisenverbindungen aus LFP- und/oder LFMP-haltigen Materialien.

Lithiumeisenphosphat (LFP) und Lithiumeisenmanganphosphat (LFMP) sowie ihre ggf. mit weiteren Elementen, insbesondere Metallen dotierten Modifikationen sind als Kathodenmaterialien - auch als cathode active materials (CAM) bezeichnet - für Batterien bekannt und werden bevorzugt in Elektrofahrzeugen und stationären Batterien eingesetzt. Da der Lithium-Ionen-Batteriemarkt stark wächst und in jeder Autobatterie zwischen 100 und 200 kg CAM enthalten ist, ist auch die Masse an wertvollen Bestandteilen wie Lithium, Phosphor und Eisen sowie anderen Inhaltsstoffen groß, womit das Recycling solcher Altbatterien zur Rückgewinnung dieser Rohstoffe sehr wichtig ist.

Dabei werden üblicherweise die Batteriezellen soweit möglich mechanisch zerlegt und der Rest, enthaltend das Kathoden- und Anodenmaterial, ggf. Binder und weitere Bestandteile, zu einer Masse zerkleinert, die aufgrund des dunklen LFP und des graphithaltigen Anodenmaterials schwarz ist und daher "Schwarze Masse" genannt wird. Die Schwarze Masse kann bedingt durch eine technisch unvollständige Trennung auch Reste anderer Batteriebestandteile, beispielsweise Metalle enthalten.

Um die wertvollen Bestandteile aus der schwarzen Masse wiederzugewinnen, sind bereits einige Recyclingansätze verfolgt worden.

In der Literatur werden dabei verschiedene Ansätze zum Recycling der LFP-haltigen Schwarzen Masse bzw. des reinen, verbrauchten LFP vorgeschlagen. So wird beispielsweise das verbrauchte LFP haltige Material in Qifang Sun et al, Journal of Alloys and Compounds 818 (2020) 153292 thermisch behandelt, wobei ein Li-armes Material entsteht, das durch entsprechende Zugabe von Li-Carbonat und einer Kohlenstoffquelle wieder in LFP überführt werden soll. Das erhaltene Li-arme Ausgangsprodukt ist jedoch sehr unbestimmt, wodurch ein entsprechend unbestimmtes LFP resultiert. Das gleiche gilt auch für das Verfahren nach Lingyu Guan et. al. in Renewable Energy 175 (2021) 559-567, bei dem das bei dem Recycling befreite LFP zusammen mit speziellen Li-, Fe-, und P-Edukten und einer Kohlenstoffquelle zu einem Gemisch aus altem und neuem LFP führt, welches ebenfalls schwer zu spezifizieren ist.

Andere Verfahren oxidieren das im LFP enthaltene Eisen(II) auf unterschiedlichen Wegen, wie etwa mit Hypochlorid oder Peroxodisulfat zu Eisen(III) und extrahieren das aus der Kristallform freigesetzte Lithium wie in Liu, Fei, et. al., JOM, Vol 74, 5, 1934-1944, 2022. Das ebenfalls anfallende, üblicherweise verunreinigte Eisenphosphat lässt sich aber zur Herstellung von LFP aufgrund von vorhandenen Verunreinigungen nur eingeschränkt einsetzen.

Derselbe Nachteil kommt in der Regel auch beim Lösen von LFP haltigen Materialien in starken Säuren zum Tragen, bei denen ebenfalls verunreinigtes Eisenphosphat anfällt, wie in Kumar et. al. Waste Management 113 (2020), 32-40.

Bei anderen Recyclingansätzen, wie in der der US20220263147A1 beschrieben, erfolgt die Wiedergewinnung einzelner Bestandteile durch einen pyrometallurgischen Prozess mit einem großen Energieeinsatz in Form sehr hoher Temperaturen.

Auch wenn die meisten LFP-Recyclingverfahren auf die Wiedergewinnung von Lithium gerichtet sind, ist bezogen auf die Gesamtmenge der schwarzen Masse der Gewichtsanteil an Eisen und Phosphor ungleich höher als der von Lithium. Daher bietet sich die Schwarze Masse auch als interessante Rohstoffquelle für diese Bestandteile an, die im Sinne des Recyclings bei der Herstellung von neuem Kathodenmaterial als Einsatzstoffe wiederverwendet werden können.

So beschreibt die WO2021174348A1 eine wässrige Aufarbeitung der schwarzen Masse, wobei das dort angewandte Verfahren allerdings große Abfallmengen erzeugt und die Trennung der Elemente oft nicht vollständig und die erhaltenen Produkte nicht immer rein sind.

Aufgabe der vorliegenden Erfindung war es daher, ein Verfahren zur Gewinnung von sehr sauberen Phosphor- und Eisenverbindungen aus LFP- und/oder LFMP-haltigen Materialien zu finden, welches ohne große Abfallströme auskommt.

Die Erfindung betrifft daher ein Verfahren zur Gewinnung von Phosphor- und Eisenverbindungen aus LFP- und/oder LFMP-haltigen Materialien, dadurch gekennzeichnet, dass man
i) ein LFP- und/oder LFMP-haltiges Material in Gegenwart einer Kohlenstoff-Quelle mit Chlorgas (Cl₂) bei einer Temperatur von 300 bis 900°C umsetzt und
ii) die gebildeten Chlorphosphorverbindungen, insbesondere Phosphoroxychlorid und ggf. Phosphortrichlorid und Eisenchlorid im Abgasstrom abgeleitet werden, und aus dem Abgasstrom
iii) das Eisenchlorid, vorzugsweise durch Resublimation und
iv) die Chlorphosphorverbindungen, insbesondere Phosphoroxychlorid und ggf. Phosphortrichlorid, vorzugsweise durch Kondensation, bei unterschiedlichen Temperaturen getrennt werden.

### LFP- und/oder LFMP-haltiges Material

Als LFP- und/oder LFMP-haltiges Material wird für das erfindungsgemäße Verfahren insbesondere ein Material verwendet, enthaltend einen Anteil von 5 bis 100 Gew.-%, vorzugsweise 40 bis 99 Gew.-%, insbesondere 50 bis 99 Gew.-%, besonders bevorzugt von 70 bis 99 Gew.-% an LFP- und/oder LFMP.

Bevorzugt ist die Beschreibung der Zusammensetzung des eingesetzten Materials auch über die Bestimmung des Gewichtsanteils bestimmter Elemente in dem LFP- und/oder LFMP-haltigen Material möglich, jeweils bezogen auf die Menge an LFP- und/oder LFMP-haltigen Material, wobei das eingesetzte Material vorzugsweise enthält:
1 bis 36 Gew.-% Fe,
1 bis 20 Gew.-% P,
0 bis 35 Gew.-% Mn,
1 bis 8 Gew.% Li und
1 bis 55 Gew. %, vorzugsweise 1 bis 40 Gew.-%, insbesondere 1 bis 30 Gew.-% Kohlenstoff.

Diese Mengen können einerseits aus dem LFP, dem LFMP aber auch von den übrigen Bestandteilen des eingesetzten Materials stammen, wie beispielsweise aus Resten metallischer Bestandteile. Die Bestimmung der elementaren Anteile erfolgt vorzugsweise über die klassischen Methoden für die Elementaranalyse.

Bevorzugt enthält das eingesetzte Material weiterhin 1 bis 55 Gew.-%, vorzugsweise 1 bis 40 Gew.-%, insbesondere 1 bis 30 Gew.-% an Kohlenstoff, insbesondere Graphit und/oder Russ. Bevorzugt beträgt die Summe an LFP- und/oder LFMP und Kohlenstoff im LFP- und/oder LFMP-haltigen Material mehr als 70 Gew.-%, vorzugsweise mehr als 80 Gew.-%, besonders bevorzugt mehr als 90 Gew.-%.

Bevorzugt enthält das LFP- und/oder LFMP-haltige Material ein molares Kohlenstoff/Phosphor-Verhältnis von größer gleich 1, vorzugsweise von 1 bis 20, besonders bevorzugt von 1 bis 10, insbesondere 1 bis 5, ganz besonders bevorzugt von 1 bis 4.

Sofern das eingesetzte Material weniger als 1 mol Kohlenstoff pro 1 mol Phosphor enthält, vorzugsweise bezogen auf das im Material enthaltende LFP und LFMP, wird dem Material bevorzugt vor der Reaktion noch so viel an Kohlenstoff zugesetzt, dass das gewünschte Verhältnis erreicht wird.

Als Kohlenstoffquelle ist beispielsweise Kohlenmonoxid, Phosgen, CCl₄ und/oder bevorzugt Graphit oder Ruß zu nennen.

Das eingesetzte Material enthält vorzugsweise wenigstens 1, vorzugsweise von 1 bis 4 mol Kohlenstoff pro 1mol Phosphor.

Auch Metalle, bevorzugt von 0 bis 15 Gew.-%, vorzugsweise 0 bis 5 Gew.-%, insbesondere Al, Cu, Co und Ni können enthalten sein.

Bevorzugt ist, dass das eingesetzte Material vorzugsweise weniger als 10 Gew.-%, insbesondere weniger als 1 Gew.-%, besonders bevorzugt weniger als 0,1 Gew.-% an Polymerpartikel, insbesondere Plastik wie Polyethylen und/oder Polypropylen enthält.

Auch ist es bevorzugt, wenn das eingesetzte Material weniger als 5 Gew.-% an PVDF (Polyvinylidenfluorid) und/oder anderer Binder wie beispielsweise Carboxymethylcellulose oder Alginate enthält. Bevorzugt ist der Gehalt an allen Bindern kleiner 5 Gew.-%. Bevorzugt beträgt der VOC Gehalt des eingesetzten Materials weniger als 1 Gew.-%, insbesondere weniger als 0,1 Gew.-%, besonders bevorzugt weniger als 0,01 Gew.-%. Unter VOC (volatile organic compounds) werden vorzugsweise organische Verbindungen mit Siedepunkten im Bereich von 50 bis 260°C, bei einem Standarddruck von 101,3 kPa verstanden.

Bevorzugt wird als LFP- und/oder LFMP-haltiges Material die schwarze Masse aus einer Batteriezerkleinerung eingesetzt.

Das eingesetzte Material hat vorzugsweise eine mittlere Teilchengröße von 0,1 µm bis 10 mm. Die Teilchengröße kann je nach Dimension einfach über eine Siebung bestimmt werden oder für kleinere Teilchen über die Methode der Laserbeugung respektive Laserstreuung. Die jeweils am besten einzusetzende Methode ist dem Fachmann bekannt.

Bei dem eingesetzten LFP- und/oder LFMP-haltigen Material kann es sich auch um ein beschichtetes Material handeln. Als Beschichtungsmittel sind vorzugsweise Kohlenstoff, insbesondere Graphit, sowie Metalloxide zu nennen.

Sofern das eingesetzte Material einen Binderanteil von größer als 1 Gew.-%, bezogen auf das Material, besitzt, erfolgt vorzugsweise eine Herauslösung durch eine Behandlung mit organischem Lösungsmittel, insbesondere Aceton, Ethylacetat, Methylethylketon, Tetrahydrofuran (THF), Acetessigsester, Acetylaceton, Dioxan und/oder Acetanhydrid sowie Mischungen davon, um den Gehalt auf weniger als 0,1 Gew.-% zu reduzieren.

Sofern das Material einen Polymeranteil, insbesondere Plastik von größer als 1 Gew.-% enthält, ist es vorteilhaft, das Material zunächst einer thermischen Behandlung bei einer Temperatur von 300 bis 600°C zu unterziehen, vorzugsweise unter Inertgas, um den Polymeranteil auf weniger als 0,1 Gew.-% zu reduzieren. Ein möglicher Binderanteil von größer als 1 Gew.-% kann neben einer Herauslösung mit organischen Lösungsmittel alternativ oder zusätzlich ebenfalls durch eine thermische Behandlung bei einer Temperatur von 300 bis 700°C, vorzugsweise unter Inertgas, auf weniger als 0,1 Gew.-% reduziert werden.

### Reaktor

Das nach dem erfindungsgemäßem Verfahren einzusetzende Material wird vorzugsweise in einen Reaktor gegeben, der vorzugsweise mit einer unter den einzustellenden Reaktionsbedingungen resistenten Schicht versehen ist. Bevorzugte Reaktormaterialien sind mit Nickel oder Graphit beschichtete Reaktoren. Als solche können Rohreaktoren wie Drehrohrreaktoren oder andere Reaktoren verwendet werden. Besonders bevorzugt sind Reaktoren, die eine Bewegung des Materials während der Reaktion erlauben, um eine möglichst effektive Kontaktaufnahme von Material und Chlorgas zu erlauben. Dabei sind Wirbelbettvorrichtungen, sowie Drehrohrreaktoren oder eine Reaktion in einer Extrudervorrichtung mit Schneckenvortrieb bevorzugt.

Im Falle eines Rohreaktors beträgt die Reaktorlänge vorzugsweise 0,2 bis 40 m. Die Verweilzeit im Reaktor während der Reaktion richtet sich in der Regel nach Temperatur und Kontaktmöglichkeit von Material zu Chlorgas. Dabei kann sich die Verweilzeit im Reaktor beispielsweise von einer Minute bis 5 Stunden hinziehen. Das erfindungsgemäße Verfahren kann als Batch oder kontinuierlich betrieben werden.

### Verfahren:

Die Umsetzung erfolgt bevorzugt unter Ausschluss von Luft. Eventuell im Reaktor enthaltene Luft wird zum Start der Reaktion vorzugsweise durch ein inertes Gas, zum Beispiel Stickstoff, verdrängt.

Die Umsetzung mit Chlorgas erfolgt bei einer Temperatur von 300 bis 900°C, insbesondere bei 350 bis 750 °C. Sofern das Verfahren bei einer Temperatur von 300 bis 320°C betrieben wird, ist es vorteilhaft, nicht vollständig aus dem Reaktor entwichenes Eisenchlorid durch eine nachträgliche Temperatur-erhöhung auf 350 bis 400°C auszutreiben. Die Temperatur-erhöhung erfolgt vorzugsweise, nachdem im Abgas der Gehalt an Phosphorverbindungen, gemessen mit Hilfe eines entsprechend in Gewichtsprozenten kalibrierten Gasphasen-IR-Spektrometers, von kleiner als 0,1 Gew.-%, insbesondere kleiner als 0,01 Gew.-% beträgt.

Das Chlorgas kann dabei auf verschiedene Weise mit dem Material in Kontakt gebracht werden. Vorzugsweise wird Chlor über das Material geleitet, wobei das Material zur effektiven Umsetzung bevorzugt während der Reaktion bewegt wird. Dies kann in einem Drehrohrofen erfolgen oder in einem Schaufeltrockner, in dem das Material bewegt wird. Das Chlorgas kann aber auch durch das Material hindurchgeleitet werden, was beispielsweise in einem Wirbelbett oder Festbett erreicht werden kann. Gegebenenfalls kann zu diesem Zwecke das Material zuvor einer Formgebung, zum Beispiel Kompaktierung oder Pelletierung, unterzogen werden. Vorzugsweise befindet sich an dem Reaktor ein Outlet für den Abgasstrom. In dem Abgasstrom befinden sich die gasförmigen Reaktionsprodukte, flüchtigen Bestandteile des Materials sowie ggf. überschüssiges Chlorgas, die zusammen aus dem Reaktionsraum abgeleitet werden können.

Die Reaktion ist vorzugsweise beendet, wenn der Anteil von Phosphorverbindungen, vorzugsweise gemessen mit Hilfe eines entsprechend in Gewichtsprozenten kalibrierten Gasphasen-IR-Spektrometers, von kleiner als 0,1 Gew.-%, insbesondere kleiner als 0,01 Gew.-% beträgt.

### Schritt ii)

In dem Abgasstrom befindet sich neben den Chlorphosphorverbindungen, insbesondere Phosphoroxychlorid und ggf. Phosphortrichlorid auch gasförmiges Eisen(III)chlorid, und ggf. auch AlCl₃, sofern Aluminium in dem eingesetzten Material enthalten ist.

### Schritt iii)

Bei einer Reaktionstemperatur von 300 bis 320°C ist der Anteil an Eisenchlorid im Abgasstrom in der Regel vergleichsweise klein und erhöht sich erst nach einer Temperaturerhöhung auf 350 bis 400°C. Eisen(III)chlorid und auch AlCl₃, sofern Aluminium in dem eingesetzten Material enthalten ist, lassen sich aus dem Abgasstrom vorzugsweise durch Resublimation an unterschiedlich kühlen Oberflächen abscheiden und voneinander trennen. Sofern das Eisenchlorid zusammen mit AlCl₃ im Abgasstrom vorhanden ist, können die jeweiligen Chloride aufgrund genügend unterschiedlicher Siedepunkte auch fraktioniert an verschiedenen Oberflächen mit unterschiedlichen Temperaturen resublimiert und dadurch sehr sauber getrennt werden.

Bevorzugte Abscheidetemperaturen sind für FeCl₃ kleiner gleich 307°C, insbesondere 150 bis 300°C und für AlCl₃ kleiner gleich 150°C, insbesondere 110 bis 149°C.

Das nach dem erfindungsgemäßen wiedergewonnene Eisen in Form von Eisen(III)chlorid ist bereits sehr rein und kann dann in die gewünschte Rohstoffform des Eisens beispielsweise für die erneute Herstellung von LFP und/oder LFMP überführt werden. Als Beispiele sind hier das Eisensulfat, Eisennitrat, Eisenphosphat oder die unterschiedlichsten Formen des Eisenoxids zu nennen.

Alternativ kann das Eisenchlorid auch ohne dass es durch Resublimation abgeschieden wurde, direkt als Gasstrom in eine wässriges Medium, enthaltend Schwefelsäure, Salpetersäure oder Phosphorsäure, eingeleitet werden und durch zur Bildung entsprechender Eisen(III)sulfate,-nitrate oder -phosphate gebracht werden. Ggf. wird bei der Umsetzung ein geeignetes Reduktionsmittel mitverwendet, um zu einem Eisen(II)sulfat, Eisen(II)nitrat bzw. Eisen(II)phosphat zu gelangen.

Bevorzugt ist jedoch die Abtrennung von Eisenchlorid aus dem Abgasstrom durch Resublimation.

### Schritt iv)

Bei dem erfindungsgemäßen Verfahren können die Chlorphosphorverbindungen, bevorzugt das Phosphoroxychlorid und ggf. ebenfalls gebildetes Phosphortrichlorid, vorzugsweise mittels eines Kondensators dem Abgasstrom entnommen werden und ggf. überschüssiges Chlorgas zurückgeführt werden.

Aus dem Abgasstrom wird vorzugsweise das bei Reaktionstemperatur gasförmige Phosphoroxychlorid und das ggf. ebenfalls gebildete Phosphortrichlorid mittels eines Kondensators abgetrennt. In der Regel bildet sich ein Gemisch an Phosphoroxychlorid und Phosphortrichlorid, welches hinsichtlich seiner Komponenten weiter destillativ aufgetrennt werden kann. Dadurch sind die Phosphorkomponenten in sehr reiner Form zu gewinnen. Bevorzugt ist das erfindungsgemäße Verfahren dadurch gekennzeichnet, dass der aus dem Schritt ii) abgeleitete Abgasstrom Phosphortrichlorid enthält und die Phosphortrichlorid enthaltende Chlorphosphorverbindungen aus Schritt iv) oder das Phosphortrichlorid nach Separation daraus mit Chlorgas bei einer Temperatur von 20 bis 160°C umgesetzt wird.

Bei der Umsetzung bildet sich Phosphorpentachlorid. Bevorzugt ist dabei ein molares Chlor/Phosphortrichlorid-Verhältnis von 1 : 20.

Bevorzugt ist das erfindungsgemäßes Verfahren zur Wiedergewinnung von Phosphorverbindungen in Form von Chlorphosphorverbindungen, insbesondere in Form einer Mischung von Phosphoroxychlorid und Phosphortrichlorid.

Je nach Methode der Herstellung von LFP bzw. LFMP kann Phosphoroxychlorid und/oder Phosphortrichlorid als solches eingesetzt werden oder zunächst über einen Hydrolyseschritt in die entsprechenden Säuren des Phosphors überführt werden, woraus je nach Bedarf durch Neutralisation ihre Salze oder ihre Oxide hergestellt werden.

Phosphoroxychlorid und Phosphortrichlorid fallen im Abgasstrom üblicherweise in einem Gewichtsverhältnis von 10 zu 1 bis 1 zu 10 an.

Die Chlorphosphorverbindungen aus dem erfindungsgemäßen Verfahren kann man zugunsten des Phosphortrichlorid und damit zu dem bevorzugten Edukt für die Phosphorpentachlorid-Bildung fahren, in dem man die Temperatur vorzugsweise oberhalb von 500°C durchführt. Ebenfalls bevorzugt ist es, das Verfahren bei einem molaren Kohlenstoff/Phosphor-Verhältnis von größer als 3 durchzuführen. Auf diese Weise kann man das Gewichtsverhältnis von Phosphortrichlorid/Phoshoroxychlorid von größer als 1 bringen.

Sofern das erfindungsgemäße Verfahren ohne stöchiometrischen Chlorüberschuss betrieben wird und sich somit wenig bis kein Chlor im Abgasstrom befindet, kann der die Chlorphosphorverbindungen, insbesondere Phosphoroxychlorid und ggf. Phosphortrichlorid enthaltende Abgasstrom, vorzugsweise, nachdem er von Eisenchlorid befreit wurde, auch in eine wässrige Lösung eingeleitet werden, um die entsprechenden Säuren des Phosphors wie Phosphorsäure und Phosphonsäuren zu erhalten, aus denen dann ggf. weitere Phosphorderivate, wie deren Ester hergestellt werden können.

Nach Beendigung des erfindungsgemäßen Verfahrens befinden sich im Rückstand alle unter Reaktionsbedingungen nicht-flüchtigen Bestandteile des eingesetzten Materials oder deren nicht-flüchtigen Reaktionsprodukte, insbesondere in Form von Chloriden, auch LiCl. Zur weiteren Aufarbeitung des Rückstandes und Rückgewinnung von Wertstoffen, allen voran Lithium, kann der Rückstand in Wasser aufgelöst werden, vorzugsweise bei einer Temperatur von 10 bis 40°C und von unlöslichen Bestandteilen getrennt werden.

Als unlöslicher Rückstand des erfindungsgemäßen Verfahrens ist insbesondere Graphit zu nennen, sofern dieser in dem eingesetzten Material enthalten war. Die wasserlöslichen Bestandteile können dann ggf. nach Ermittlung ihrer möglichen Existenz nach dem klassischen H₂S-Trennungsgang voneinander in Form ihre Sulfide, Chloride, Phosphate, Fluoride oder sonstigen Fällungsverbindungen getrennt und isoliert werden.

Das nach einem solchen H₂S-Trennungsgang verbleibende Li-Salz kann dann als Li-Carbonat, -Phosphat oder -Fluorid gefällt und so rückgewonnen werden. Beispielsweise ist eine solche Isolierung Teil des in WO2022/219223A1 beschriebenen Verfahrens.

Das nach einem solchen H₂S-Trennungsgang verbleibende schwerlösliche Mangansulfid kann dann mit Luft zum Mangansulfat umgesetzt und so rückgewonnen, respektive zur Herstellung von LFMP wiedereingesetzt werden.

### Beispiele

**Analytik:** Die Analytik auf Phosphorverbindungen, insbesondere POCl₃ und PCl₃, wird vorzugsweise mittels online-IR im Abgasstrom durchgeführt. Dazu wird der Gasstrom aus dem Reaktor durch eine Glasküvette geleitet, die den Durchgang von IR-Strahlung in einem möglichst weiten Spektralbereich erlaubt, zum Beispiel durch den Einsatz von Fenstern aus einer Thaliumverbindung. Durch vorhergehende Kalibrierung (Totalverdampfen von bekannten PCl₃ respektive POCl₃-Masseströmen in einen Stickstoff-Gasstrom mit bekanntem Volumenstroms und Quantifizierung charakteristischer Banden im IR-Spektrum) kann der Masseanteil der Phosphorverbindungen im Abgasstrom ermittelt werden.

### Beispiel 1

10g eines Lithiumionenbatterie-Kathodenmaterials (Lithiumeisenphosphat), mit folgenden Analysendaten: Fe 34,6%, P 19,5%, C: 1,8%, mit einer mittleren Partikelgrößenverteilung d10 0,35µm, d50 0,62µm, d100 6,7µm, Li 4,6% wird mit feingemahlenem Kohlenstoff (3,3 mol Kohlenstoff pro mol Phosphor) trocken innig vermischt.

Das Pulvergemisch wird in einem beheizten Röhrenreaktor (aus Quarzglas, 120mm Durchmesser) in einer Quarzglasschale im Stickstoffstrom auf 800°C erhitzt. Dann wird auf einen Chlorgasstrom von 30ml/min umgeschaltet. Es wird bei dieser Temperatur so lange gehalten, bis im Abgas der Gehalt an Phosphorverbindungen, gemessen mit Hilfe eines entsprechend in Gewichtsprozenten kalibrierten Gasphasen-IR-Spektrometers, kleiner als 0,01 Gew.-% beträgt.

In der Schale bleibt ein Rückstand Lithiumchlorid und überschüssiger Kohlenstoff zurück. Der Rückstand wird in destilliertem Wasser aufgenommen und der Kohlenstoff abfiltriert. Optional kann durch Zugabe eines wasserlöslichen Fluorids oder Carbonats reines Lithiumfluorid oder Lithiumcarbonat erhalten werden.

Das erhaltene Eisenchlorid wird an einer 160°C kühlen Fläche aus dem Abgasstrom abgeschieden und anschließend gesammelt und bei Bedarf mit Schwefelsäure zu Eisensulfat umgesetzt.

### Reinheit des Eisenchlorids: Das Eisenchlorid hat einen Gehalt von 90-100%

Das erhaltene Destillat, enthaltend aus PCl₃ und POCl₃ mit einem Gewichtsverhältnis von 2 zu 1, wird in einer geeigneten Kolonne destilliert und kann für chemische Verfahren, beispielsweise zur Herstellung von Phosphorsäureestern respektive Phosphonsäureestern, eingesetzt werden. Ebenfalls kann das POCl₃ zur Herstellung von Polyphosphorsäure oder Phosphorsäure verwendet werden. Je nach Verfahren sind dies mögliche Einsatzstoffe zur Herstellung von LFP oder LFMP.

### Beispiel 2

Es werden 50g "Schwarzer Masse", mit einem Gehalt an LFP von 55% und einem C-Gehalt von 30% sowie 4% metallischem Fe, (womit sich ein Gesamteisengehalt von 23,3% ergibt) 4% Aluminium (die Metallspuren entstammen dem Schredderprozess), und 3% Plastikteilchen (Polyethylen und/oder Polypropylen), 2% Binder und 2% VOC, erhalten aus dem Recycling von gebrauchten Lithiumeisenphosphat-Batteriezellen, eingesetzt. Das Gemisch wird mit Aceton solange gewaschen, bis der VOC Gehalt (ohne Aceton) kleiner als 1 % ist, Anschließend werden die Polymere und der Binder thermisch bei einer Temperatur von 600°C über vier Stunden in sauerstofffreier Gasatmosphäre getrocknet und zersetzt.

Der erhaltene Feststoff enthält 58% LFP und einem C-Gehalt von 32% sowie 5% Fe und 5% Aluminium.

Das schwarze Pulver wird ohne weitere Behandlung in einem beheizten Röhrenreaktor (aus Quarzglas, 120mm Durchmesser) in einer Quarzglasschale im Stickstoffstrom auf 800°C erhitzt. Dann wird auf einen Chlorgasstrom von 30ml/min umgeschaltet. Es wird diese Temperatur so lange gehalten, bis im Abgas der Gehalt an Phosphorverbindungen, gemessen mit Hilfe eines entsprechend in Gewichtsprozenten kalibrierten Gasphasen-IR-Spektrometers, kleiner als 0,01 Gew.-% beträgt und die Resublimation von Eisenchlorid aus dem Abgasstrom an einer 160°C kühlen Fläche erfolgt und Aluminiumchlorid an einer 100°C kühlen Fläche abgeschieden wird.

Das erhaltene Eisenchlorid wird anschließend gesammelt und kann bei Bedarf mit Schwefelsäure zu Eisensulfat umgesetzt werden.

Das erhaltenen Aluminiumchlorid wird anschließend gesammelt und kann ggf. für chemische Prozesse oder als Fällungsmittel in Kläranlagen verwendet werden.

Das erhaltene Destillat, enthaltend PCl₃ und POCl₃ in einem Gewichtsverhältnis von 2 zu 1, wird in einer geeigneten Kolonne destilliert und kann für chemische Verfahren, beispielsweise zur Herstellung von Phosphorsäureestern respektive Phosphonsäureestern, eingesetzt werden. Ebenfalls kann das POCl₃ durch Umsetzung mit Wasser zur Herstellung von Polyphosphorsäure oder Phosphorsäure verwendet werden.

Der Rückstand in der Quarzglasschale enthält Lithiumchlorid, Graphit und Spuren der Chloride mehrwertiger Schwermetalle wie Kupfer. Der Rückstand wird in destilliertem Wasser aufgenommen. Die Lösung wird filtriert, das im Filter zurückbleibende Graphit mit Wasser gewaschen und getrocknet. Die Lösung wird über einen geeigneten Ionenaustauscher (Lewatit^{®} TP 208 oder TP260) von Schwermetallspuren gereinigt. Aus der so gereinigten Lithiumchlorid-Lösung kann optional durch Zugabe eines wasserlöslichen Fluorids oder Carbonats reines Lithiumfluorid oder Lithiumcarbonat erhalten werden.

### Beispiel 3

Es werden 50g "Schwarzer Masse", mit einem Gehalt an LFMP von 55% und einem C-Gehalt von 30% sowie 4% Fe, 4% Aluminium, Kupfer (<1%) (die Metallspuren entstammen dem Schredderprozess), und 3% Plastikteilchen (PE und PP), 2% Binder und 2% VOC, erhalten aus dem Recycling von gebrauchten Lithiumeisenphosphat-Batteriezellen, eingesetzt. Das Gemisch wird mit Aceton solange gewaschen, bis der VOC Gehalt (ohne Aceton) kleiner als 1 % ist, Anschließend werden die Polymere und der Binder thermisch bei einer Temperatur von 600°C über vier Stunden in sauerstoff-freier Gasatmosphäre getrocknet und zersetzt.

Der erhaltene Feststoff enthält 58% LFMP und einen C-Gehalt von 32% sowie 5% Fe und 5% Aluminium.

Das schwarze Pulver wird ohne weitere Behandlung in einem beheizten Röhrenreaktor (aus Quarzglas, 120mm Durchmesser) in einer Quarzglasschale im Stickstoffstrom auf 800°C erhitzt. Dann wird auf einen Chlorgasstrom von 30ml/min umgeschaltet. Es wird diese Temperatur so lange gehalten, bis im Abgas der Gehalt an Phosphorverbindungen, gemessen mit Hilfe eines entsprechend in Gewichtsprozenten kalibrierten Gasphasen-IR-Spektrometers, kleiner als 0,01 Gew.-% ist und durch Resublimation Eisenchlorid an einer 160°C kühlen Fläche abgeschieden wird und Aluminiumchlorid an einer 100°C kühlen Fläche abgeschieden wird.

Das erhaltene Eisenchlorid wird anschließend gesammelt und kann bei Bedarf mit Schwefelsäure zu Eisensulfat umgesetzt.

Das erhaltenen Aluminiumchlorid wird anschließend gesammelt und kann für chemische Prozess oder als Fällungsmittel in Kläranlagen verwendet werden.

Das erhaltene Destillat, enthaltend PCl₃ und POCl₃ in einem Gewichtsverhältnis von 2 zu 1, wird in einer geeigneten Kolonne destilliert und kann für chemische Verfahren, beispielsweise zur Herstellung von Phosphorsäureestern respektive Phosphonsäureestern, eingesetzt werden. Ebenfalls kann das POCl₃ durch Umsetzung mit Wasser zur Herstellung von Polyphosphorsäure oder Phosphorsäure verwendet werden.

Der Rückstand im Schälchen wird mit destilliertem Wasser aufgenommen und durch einen Filter filtriert.

Im erhaltenen Filtrat stellt man den pH-Wert mit H₂SO₄ auf 2 ein und lässt langsam H₂S hindurchperlen. Der ausgefallene (geringe) Niederschlag wird filtriert, getrocknet und an Luft auf 600°C erhitzt, wobei sich CuSO₄ bildet.

Durch das erhaltene Filtrat lässt man erneut langsam H₂S-Gas perlen und stellt den pH-Wert mit NaOH auf 8 ein. Der ausgefallene Niederschlag, wird filtriert, getrocknet und an der Luft auf 600°C erhitzt, wobei sich MnSO₄ bildet.

Das im Filtrat enthaltene Lithium wird durch Zugabe von Natriumcarbonat als Lithiumcarbonat ausgefällt, abfiltriert und getrocknet.

## Patentansprüche

1. Verfahren zur Gewinnung von Phosphor- und Eisenverbindungen aus LFP- und/oder LFMP-haltigen Materialien, **dadurch gekennzeichnet, dass** man
i) ein LFP- und/oder LFMP-haltiges Material in Gegenwart einer Kohlenstoff-Quelle mit Chlorgas bei einer Temperatur von 300 bis 900°C umsetzt und
ii) die gebildeten Chlorphosphorverbindungen, insbesondere Phosphoroxychlorid und ggf. Phosphortrichlorid und Eisenchlorid im Abgasstrom abgeleitet werden, und aus dem Abgasstrom
iii) das Eisenchlorid und
iv) die Chlorphosphorverbindungen bei unterschiedlichen Temperaturen getrennt werden.

2. Verfahren nach Anspruch 1, **dadurch gekennzeichnet**, **dadurch gekennzeichnet, dass** aus dem Abgasstrom das Eisensulfat in Schritt iii) durch Resublimation abgeschieden wird.

3. Verfahren nach wenigstens einem der Ansprüche 1 oder 2, **dadurch gekennzeichnet, dass** aus dem Abgasstrom die Chlorphosphorverbindungen, insbesondere Phosphoroxychlorid und ggf. Phosphortrichlorid in Schritt iv) durch Kondensation abgeschieden werden.

4. Verfahren nach wenigstens einem der Ansprüche 1 bis 3, **dadurch gekennzeichnet, dass** als LFP- und/oder LFMP-haltiges Material ein Material enthaltend einen Anteil von 5 bis 100 Gew.-%, vorzugsweise 40 bis 99 Gew.-%, insbesondere 50 bis 99 Gew.-%, besonders bevorzugt von 70 bis 99 Gew.-% an LFP- und/oder LFMP verwendet wird.

5. Verfahren nach wenigstens einem der Ansprüche 1 bis 4, **dadurch gekennzeichnet, dass** als LFP- und/oder LFMP-haltiges Material ein Material verwendet, enthaltend
1 bis 36 Gew.-% Fe,
1 bis 20 Gew.-% P,
0 bis 35 Gew.-% Mn,
1 bis 8 Gew.% Li und
1 bis 55 Gew. %, vorzugsweise 1 bis 40 Gew.-%, insbesondere 1 bis 30 Gew.-% Kohlenstoff.

6. Verfahren nach wenigstens einem der Ansprüche 1 bis 5, **dadurch gekennzeichnet, dass** das LFP- und/oder LFMP-haltige Material 1 bis 55 Gew.-%, vorzugsweise 1 bis 40 Gew.-% an Kohlenstoff, insbesondere Graphit und oder Ruß enthält.

7. Verfahren nach wenigstens einem der Ansprüche 1 bis 6, **dadurch gekennzeichnet, dass** das LFP- und/oder LFMP-haltige Material ein molares Kohlenstoff/Phosphor-Verhältnis von größer gleich 1, vorzugsweise von 1 bis 20, besonders bevorzugt von 1 bis 10, insbesondere von 1 bis 5, ganz besonders bevorzugt von 1 bis 4 besitzt.

8. Verfahren nach wenigstens einem der Ansprüche 1 bis 7, **dadurch gekennzeichnet, dass** der in Schritt ii) abgeleitete Abgasstrom Phosphoroxychlorid und Phosphortrichlorid enthält, vorzugsweise in einem Gewichtsverhältnis von 10 zu 1 bis 1 zu 10.

9. Verfahren nach wenigstens einem der Ansprüche 1 bis 8, **dadurch gekennzeichnet, dass** der aus dem Schritt ii) abgeleitete Abgasstrom Phosphortrichlorid enthält und die Phosphortrichlorid enthaltende Chlorphosphorverbindungen aus Schritt iv) oder das Phosphortrichlorid nach Separation daraus mit Chlorgas bei einer Temperatur von 20 bis 160°C umgesetzt wird.

10. Verfahren nach wenigstens einem der Ansprüche 1 bis 9, **dadurch gekennzeichnet, dass** das Eisenchlorid in Schritt iii) bei einer Temperatur kleiner gleich 300°C abgeschieden wird.

## Geänderte Patentansprüche

### Geänderte Patentansprüche gemäss Regel 137(2) EPÜ.

1. Verfahren zur Gewinnung von Phosphor- und Eisenverbindungen aus LFP- und/oder LFMP-haltigen Materialien, **dadurch gekennzeichnet, dass** man
i) ein LFP- und/oder LFMP-haltiges Material in Gegenwart einer Kohlenstoff-Quelle mit Chlorgas bei einer Temperatur von 300 bis 900°C umsetzt und
ii) die gebildeten Chlorphosphorverbindungen, insbesondere Phosphoroxychlorid und ggf. Phosphortrichlorid und Eisenchlorid im Abgasstrom abgeleitet werden, und aus dem Abgasstrom
iii) das Eisenchlorid und
iv) die Chlorphosphorverbindungen bei unterschiedlichen Temperaturen getrennt werden.

2. Verfahren nach Anspruch 1, **dadurch gekennzeichnet**, **dadurch gekennzeichnet, dass** aus dem Abgasstrom das Eisenchlorid in Schritt iii) durch Resublimation abgeschieden wird.

3. Verfahren nach wenigstens einem der Ansprüche 1 oder 2, **dadurch gekennzeichnet, dass** aus dem Abgasstrom die Chlorphosphorverbindungen, insbesondere Phosphoroxychlorid und ggf. Phosphortrichlorid in Schritt iv) durch Kondensation abgeschieden werden.

4. Verfahren nach wenigstens einem der Ansprüche 1 bis 3, **dadurch gekennzeichnet, dass** als LFP- und/oder LFMP-haltiges Material ein Material enthaltend einen Anteil von 5 bis 100 Gew.-%, vorzugsweise 40 bis 99 Gew.-%, insbesondere 50 bis 99 Gew.-%, besonders bevorzugt von 70 bis 99 Gew.-% an LFP- und/oder LFMP verwendet wird.

5. Verfahren nach wenigstens einem der Ansprüche 1 bis 4, **dadurch gekennzeichnet, dass** als LFP- und/oder LFMP-haltiges Material ein Material verwendet, enthaltend
1 bis 36 Gew.-% Fe,
1 bis 20 Gew.-% P,
0 bis 35 Gew.-% Mn,
1 bis 8 Gew.% Li und
1 bis 55 Gew. %, vorzugsweise 1 bis 40 Gew.-%, insbesondere 1 bis 30 Gew.-% Kohlenstoff.

6. Verfahren nach wenigstens einem der Ansprüche 1 bis 5, **dadurch gekennzeichnet, dass** das LFP- und/oder LFMP-haltige Material 1 bis 55 Gew.-%, vorzugsweise 1 bis 40 Gew.-% an Kohlenstoff, insbesondere Graphit und oder Ruß enthält.

7. Verfahren nach wenigstens einem der Ansprüche 1 bis 6, **dadurch gekennzeichnet, dass** das LFP- und/oder LFMP-haltige Material ein molares Kohlenstoff/Phosphor-Verhältnis von größer gleich 1, vorzugsweise von 1 bis 20, besonders bevorzugt von 1 bis 10, insbesondere von 1 bis 5, ganz besonders bevorzugt von 1 bis 4 besitzt.

8. Verfahren nach wenigstens einem der Ansprüche 1 bis 7, **dadurch gekennzeichnet, dass** der in Schritt ii) abgeleitete Abgasstrom Phosphoroxychlorid und Phosphortrichlorid enthält, vorzugsweise in einem Gewichtsverhältnis von 10 zu 1 bis 1 zu 10.

9. Verfahren nach wenigstens einem der Ansprüche 1 bis 8, **dadurch gekennzeichnet, dass** der aus dem Schritt ii) abgeleitete Abgasstrom Phosphortrichlorid enthält und die Phosphortrichlorid enthaltende Chlorphosphorverbindungen aus Schritt iv) oder das Phosphortrichlorid nach Separation daraus mit Chlorgas bei einer Temperatur von 20 bis 160°C umgesetzt wird.

10. Verfahren nach wenigstens einem der Ansprüche 1 bis 9, **dadurch gekennzeichnet, dass** das Eisenchlorid in Schritt iii) bei einer Temperatur kleiner gleich 300°C abgeschieden wird.
